# EUROPÄISCHE PATENTSCHRIFT

(11) **EP 0 500 545 B1**
(45) Veröffentlichungstag und Bekanntmachung des Hinweises auf die Patenterteilung: **31.08.1994**
(21) Anmeldenummer: 90913790.3
(22) Anmeldetag: 29.09.1990
(51) Int. Cl.: H02J 7/00, H02H 7/18

(54) **KONTROLLEINRICHTUNG FÜR BATTERIEGERÄT**
CONTROL UNIT FOR BATTERY-POWERED DEVICE
DISPOSITIF DE CONTROLE POUR APPAREIL A BATTERIE

(30) Priorität: 08.11.1989 DE 3937158
(43) Veröffentlichungstag der Anmeldung: 02.09.1992
(73) Patentinhaber: ROBERT BOSCH GMBH, 70442 Stuttgart (DE)
(72) Erfinder: ODENDAHL, Alfred, D-7035 Waldenbuch (DE); FIEBIG, Arnim, D-7022 Leinfelden-Echterdingen (DE)
(86) Internationale Anmeldenummer: DE9000745
(87) Internationale Veröffentlichungsnummer: WO9107801

(56) Entgegenhaltungen:
- DE-A- 2 520 599
- DE-A- 2 738 977
- DE-A- 3 321 814
- GB-A- 2 088 158
- US-A- 3 940 679
- US-A- 4 328 457

## Beschreibung

### Stand der Technik

Die Erfindung geht aus von einer Kontrolleinrichtung für ein Batteriegerät nach der Gattung des Hauptanpruchs. Es ist bekannt, daß Batteriegeräte, die mit wiederaufladbaren Batterien, sogenannten Akkus, ausgerüstet sind, zum Wiederaufladen der Batterie an ein Ladegerät geschaltet werden. Häufig sind die Ladegeräte derart ausgerüstet, daß sie für eine Schnelladung der Batterie verwendbar sind. Beim Schnelladen der Batterie tritt jedoch gegen Ende des Ladevorganges eine erhebliche Erwärmung der Batterie auf, so daß erkennbar ist, daß die Batterie geladen ist. Um die Batterie vor Schäden wie Überladen zu bewahren, wird ein Temperatursensor in thermischer Kopplung mit der Batterie verbunden. Der Temperatursensor erfaßt die Batterietemperatur, so daß nach Erreichen einer Grenztemperatur das Ladegerät abgeschaltet wird.

In der Praxis bedeutet dieses, daß zum Aufladen der Batterie mindestens eine dritte Leitung erforderlich ist, die auf einen entsprechenden Kontrolleingang des Ladegerätes führt. Während des Batteriebetriebes des Elektrogerätes wird diese Kontrolleitung nicht benötigt.

Aus der DE- 25 20 599 (Al) ist eine Schaltungsanordnung zum Laden von Akkumulatoren bekannt, bei der sowohl die Temperatur des Akkumulators als auch dessen Umgebung gemessen wird. Dabei wird der Ladestrom in Abhängigkeit von der Temperaturdifferenz bestimmt.

Aus der GB 2 088 158 A ist eine Batterieeinheit bekannt, bei der ein Bimetallschalter thermisch mit der Batterie gekoppelt ist und bei Erreichen eines Temperaturgrenzwertes den Stromkreis zur Batterie sowohl im Ladebetrieb als auch im Entladebetrieb unterbrechen kann.

### Vorteile der Erfindung

Die erfindungegemäße Kontrolleinrichtung mit den kennzeichnenden Merkmalen des Hauptanpruchs hat demgegenüber den Vorteil, daß die im Batteriebetrieb nicht benutzte Kontrolleitung nunmehr für weitere Funktionen verwendbar ist. Besonders vorteilhaft ist, daß im Batteriebetrieb des Gerätes eine Überwachung der Batterie bezüglich einer zu hohen Stromentnahme möglich ist.

Besonders vorteilhaft ist, daß die Auswerteschaltung auf Temperaturänderungen des Temperatursensors reagiert. Da die Temperatur der Batterie sich relativ langsam ändert, sind kurzfristige Störsignale leicht ausregelbar, so daß bei Überschreiten eines vorgegebenen Grenzwertes das ausgegebene Signal zuverlässig ist.

Durch die in den Unteransprüchen aufgeführten Maßnahmen sind vorteilhafte Weiterbildungen und Verbesserungen der im Hauptanspruch angegebenen Kontrolleinrichtung möglich.

Besonders einfache Auswerteschaltungen ergeben sich, wenn Komparatoren verwendet werden, an deren Ausgang ohne großen Aufwand entsprechende Anzeigen anschließbar sind.

Vorteilhaft ist auch, daß die Auswerteschaltung neben der statischen Temperaturerfassung auch den Temperaturgradienten mißt, so daß sie einen schnellen oder weniger schnellen Temperaturanstieg bewerten kann. Der Temperaturgradient läßt sich vorteilhaft mit einem Differenzierglied messen, das nur wenige Bauteile aufweist.

Besonders vorteilhaft wird die Kontrolleinrichtung, wenn die Zeitkonstante des Differenziergliedes veränderbar ist. Dadurch ergibt sich eine einfache Anpassung der Kontrolleinrichtung an verschiedene Batterietypen bzw. Einsatzbedindungen des Batteriegerätes insbesondere an die thermischen Zeitkonstanten eines verwendeten Elektromotors.

Als Sensor haben sich Widerstände bewährt, die in Abhängigkeit von der Temperatur ihren Widerstand ändern. Bewegliche Teile sind nicht erforderlich.

Um Batteriestrom zu sparen, ist es günstig, wenn die Anzeige abschaltbar ausgebildet ist.

Tritt ein Überlastfall bezüglich der Batterie oder des Elektrogerätes ein, der durch Überschreiten einer der vorgegebenen Grenzen erkannt wurde, dann wird vorteilhaft die Batterie bzw. das Elektorgerät abgeschaltet.

Weitere Vorteile der Erfindung sind der Beschreibung entnehmbar.

### Zeichnung

Ein Ausführungsbeispiel der Erfindung ist in der Zeichnung dargestellt und in der nachfolgenden Beschreibung näher erläutert. Es zeigen Figur 1 eine Batterie mit einem Ladegerät, Figur 2 eine Batterie mit einem Elektrowerkzeug und Figur 3 ein Ausführungsbeispiel der Erfindung.

### Beschreibung des Ausführungsbeispiels

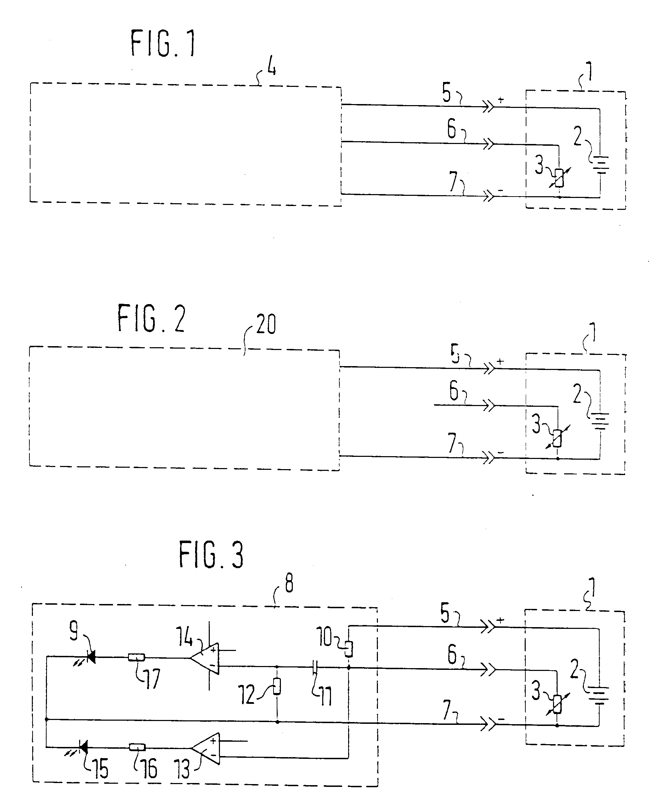

Es ist bekannt, daß wiederaufladbare Batterien 2, beispielsweise Nickelcadmiumzellen (NC-Akkus), durch ein Ladegerät 4 während einer Schnelladung aufgeladen werden können. Zu diesem Zweck wird die wiederaufladbare Batterie 2 über entsprechende Anschlüsse 5,7 mit dem Ladegerät 4 verbunden. Die Batterien 2 sind in einem Gehäuse 1 untergebracht (Figur 1).

Zum Schutz der Batterie gegen zu starke Erwärmung, die während des Aufladevorganges mit hohem Strom eintreten kann, wird ein temperaturabhängiger Widerstand 3 (Sensor) derart an der Batterie 2 befestigt, daß er mit ihr in thermischer Kopplung steht. Der temperaturabhängige Widerstand 3 mißt nun die Temperatur der Batterie 2 während des Ladevorganges und gibt ein temperaturabhängiges Signal über einen weiteren Anschluß 6 an das Ladegerät 4 ab. Über diesen Anschluß 6 wird in Abhängigkeit von der Temperatur der Batterie 2 der Ladestrom für die Batterie 2 geregelt. Erreicht die Temperatur einen bestimmten Wert, dann wird davon ausgegangen, daß nunmehr die Batterie 2 geladen ist. Das Signal des temperaturabhängigen Widerstandes 3 wird dann zum Abschalten des Ladegerätes 4 verwendet.

Wird die wiederaufladbare Batterie 2 gemäß der Figur 2 mit dem Elektrogerät 20 verbunden, dann wird der Anschluß zum temperaturabhängigen Widerstand 3 nicht benötigt. Es werden lediglich die zwei Leitungen 5,7 verwendet, die zu der Batterie 2 führen.

Ausgehend von diesem Stand der Technik wird nun der freie Anschluß 6 dazu verwendet, auch während des Batteriebetriebes bestimmte Betriebsparameter zu messen. In Figur 3 ist ein Ausführungsbeispiel dargestellt, bei dem während des Batteriebetriebes des Elektrogerätes 20 die freie Leitung 6 mit einer Auswerteschaltung 8 verbunden ist. Die Versorgung der Auswerteschaltung 8 erfolgt ebenfalls über die Anschlüsse 5 und 7. Die Anordnung der Auwerteschaltung 8 kann entweder so gewählt werden, daß sie mit dem Gehäuse 1 der Batterie 2 eine Einheit bildet. In vielen Anwendungsfällen ist es jedoch vorteilhaft, wenn die Auswerteschaltung 8 mit dem Gehäuse des Elektrogerätes 20 verbunden ist. Dabei ist besonders vorteilhaft, daß die Anzeigeelemente 9,15 im Sichtfeld des Bedieners des Elektrogerätes 20 angeordnet sind. Das Elektrogerät 20 selbst ist nicht dargestellt, es kann beispielsweise ein Elektrowerkzeug oder ein Haushaltsgerät sein.

Die Auswerteschaltung 8 weist zwei Komperatoren 13, 14 auf. Der Anschluß 6 ist zum einen direkt mit dem invertierenden Eingang des Komperators 13 verbunden und zum anderen über einen Kondensator 11 mit dem invertierenden Eingangs des Komperators 14. Zwischen dem Pluspol der Batterie (Anschluß 5) und dem Anschluß 6 ist ein erster Widerstand 10 vorgesehen. Zwischen dem nicht invertierenden Eingang des Komperators 14 und der Minusleitung der Batterie (Anschluß 7) ist ein zweiter Widerstand 12 vorgesehen. Die Ausgänge der Komperatoren 13, 14 sind jeweils über einen Vorwiderstand 16, 17 mit einem Anzeigeelement 9, 15 verbunden, die gemeinsam über die Minusleitung (Anschluß 7) auf die Batterie zurückgeführt werden. Die jeweils zweiten Eingänge der Komperatoren 13, 14 geben die gewünschten Schaltschwellen der Komperatoren 13, 14 vor. Sie sind mit Widerständen beschaltbar, so daß die Schaltschwellen der Komperatoren 13, 14 beliebig wählbar sind. Die detailierte Beschaltung ist nicht eingezeichnet, da sie allgemein bekannt ist. Als Anzeigeelemente 9, 15 sind lichtemittierende Dioden (LED) vorgesehen. Selbstverständlich lassen sich auch andere Anzeigelemente wie LCD's, Glühlampen u.a. verwenden.

Die Funktionsweise der Schaltung ist wie folgt. Die Auswerteschaltung 8 weist folgende Funktionen auf:
1. Überlastanzeige der Batterie 2,
2. Überlastanzeige des Elektrogerätes 20, beispielsweise eines Motors.

Der erste Widerstand 10 bildet mit dem temperaturabhängigen Widerstand 3, der wegen der thermischen Kopplung mit der Batterie 2 ebenfalls die Temperatur der Batterie 2 annimmt, einen Spannungsteiler, dessen Mittelpunktspannung dem invertierenden Eingang des Komperators 13 zugeführt wird. Mit zunehmender Temperatur der Batterie 2 erniedrigt sich diese Spannung. Erreicht diese Spannung den am nicht invertierenden Eingang eingestellten Schwellwert, dann schaltet der Ausgang des Komperators 13 auf high, so daß das Anzeigeelement 15 eingeschaltet wird. Durch das Aufleuchten des Anzeigeelementes 15 wird eine Überlast der Batterie 2 signalisiert. Die Schaltungsanordnung ist für einen NTC-Widerstand 3 gezeichnet, bei Verwendung eines PTC-Widerstandes ist eine entsprechende Anpassung erforderlich.

Selbstverständlich kann dieses Signal auch für weitere Steueraufgaben verwendet werden. Beispielsweise kann mit diesem Signal die Batterie 2 abgeschaltet werden, bis die Fehlerursache behoben ist.

Die Überlastanzeige des Batteriegerätes 20 beruht auf der Annahme, daß bei einer sehr starken Belastung des Batteriegerätes 20, beispielsweise eines Elektromotors, der Temperaturanstieg in der Batterie 2 in relativ kurzer Zeit erfolgt. Über das RC-Glied 11, 12 wird das Temperatursignal des temperaturabhängigen Widerstandes 3 differenziert und dem invertierenden Eingang des Komperators 14 zugeführt. Überschreitet das differenzierte Signal den vorgegebenen Schwellwert, dann zeigt das Anzeigeelement 9 eine Überlast des Batterierätes 20 an. Das RC-Glied 11, 12 ist beispielsweise über einen veränderlichen Widerstand 12 einstellbar, so daß ein beliebiger Temperaturgradient wählbar ist. Durch die Wahl der Zeitkonstanten ist vorteilhaft eine einfache Änpassung an die Batterie 2 bzw. das Batteriegerät 20 gegeben. Auch in diesem Fall ist das Ausgangssignal des Komperators 14 zum Abschalten des Batteriegerätes 20 bzw. der Batterie 2 verwendbar.

In weiterer Ausgestaltung der Erfindung ist vorgesehen, das Ausgangssignal des Komperators 14 auf einen Speicher, beispielsweise auf ein nachgeschaltetes Flipflop zu führen. Der Ausgang des Flipflops ist mit dem Anzeigeelement 9 verbunden. Im Überlastfall des Elektrogerätes 20 wird nun das Flipflop so gesetzt, daß das Anzeigeelement 9 bleibend eingeschaltet ist. Die Anzeige erlöscht erst nach Beseitigung der Fehlerursache.

## Patentansprüche

1. Kontrolleinrichtung für ein Batteriegerät (20), insbesondere für ein Elektrowerkzeug, mit einer wiederaufladbaren Batterie (12) und mit einem temperaturabhängigen Sensor (3), der mit der wiederaufladbaren Batterie (2) thermisch gekoppelt ist und die Temperatur der wiederaufladbaren Batterie (2) während des Betriebs des Batteriegerätes (20) überwacht, wobei der eine Anschluß des Sensors mit einem Anschluß der Batterie verbunden ist, und an dem zweiten Anschluß als Kontrollanschluß das Signal des Sensors abgreifbar ist, dadurch gekennzeichnet, daß der Kontrollanschluß (6) während des Batteriebetriebes des Gerätes mit einer Auswerteschaltung (8) verbunden ist und daß durch die Auswerteschaltung (8) der Temperaturgradient der Batterie (2) erfaßbar ist.

2. Kontrolleinrichtung nach Anspruch 1, dadurch gekennzeichnet, daß bei Über- bzw. Unterschreiten eines vorgegebenen Grenzwertes der Temperatur ein Signal abgibt.

3. Kontrolleinrichtung nach einem der vorhergehenden Ansprüche, dadurch gekennzeichnet, daß die Äuswerteschaltung (8) einen Komparator (13, 14) aufweist.

4. Kontrolleinrichtung nach einem der vorhergehenden Ansprüche, dadurch gekennzeichnet, daß der Temperaturgradient durch ein Differenzierglied (10, 11, 12) gebildet wird.

5. Kontrolleinrichtung nach Anspruch 4, dadurch gekennzeichnet, daß die Zeitkonstante des Differenziergliedes (10, 11, 12) wählbar ist.

6. Kontrolleinrichtung nach einem der vorhergehenden Ansprüche, dadurch gekennzeichnet, daß als Sensor (3) ein PTC-Widerstand verwendbar ist.

7. Kontrolleinrichtung nach einem der vorhergehenden Ansprüche, dadurch gekennzeichnet, daß ein abschaltbares Anzeigeelement (9, 15) der Auswerteschaltung (8) nachschaltbar ist.

8. Kontrolleinrichtung nach einem der vorhergehenden Ansprüche, dadurch gekennzeichnet, daß nach Überschreiten mindestens eines vorgegebenen Grenzwertes das Batteriegerät (20) abschaltbar ist.

## Claims

1. Monitoring device for a battery system (20), especially for an electrical tool, having a rechargeable battery (12) and having a temperature-dependent sensor (3), which is thermally coupled to the rechargeable battery (2) and checks the temperature of the rechargeable battery (2) during the operation of the battery system (20), in which the one connection of the sensor is connected to a connection of the battery, and the signal of the sensor can be picked off at the second connection as monitoring connection, characterized in that the monitoring connection (6) is connected to an evaluating circuit (8) during the operation of the battery of the system, and in that the temperature gradient of the battery (2) can be picked up by the evaluating circuit (8).

2. Monitoring device according to Claim 1, characterized in that [lacuna] emits a signal on exceeding or falling below a predetermined limiting value of the temperature.

3. Monitoring device according to one of the preceding claims, characterized in that the evaluating circuit (8) exhibits a comparator (13, 14).

4. Monitoring device according to one of the preceding claims, characterized in that the temperature gradient is formed by a differentiating element (10, 11, 12).

5. Monitoring device according to Claim 4, characterized in that the time constant of the differentiating element (10, 11, 12) is selectable.

6. Monitoring device according to one of the preceding claims, characterized in that a PTC resistor can be used as sensor (3).

7. Monitoring device according to one of the preceding claims, characterized in that a deenergizable display element (9, 15) can be connected to follow the evaluating circuit (8).

8. Monitoring device according to one of the preceding claims, characterized in that the battery system (20) can be deenergized after exceeding at least one predetermined limiting value.

## Revendications

1. Dispositif de contrôle pour un appareil (20) alimenté par une batterie, en particulier pour un outil électrique, avec une batterie rechargeable (12) et un détecteur (3) qui varie en fonction de la température et qui est accouplé de façon thermique à la batterie rechargeable (2) pendant le fonctionnement de l'appareil (20) alimenté par la batterie, l'un des branchements du détecteur étant relié à un branchement de la batterie et le signal du détecteur pouvant être recueilli sur le deuxième branchement servant de branchement de contrôle, dispositif de contrôle caractérisé en ce que le branchement de contrôle (6) est relié à un circuit d'exploitation (8), pendant le fonctionnement de l'appareil alimenté par la batterie, et en ce que le gradient de température de la batterie (2) peut être détecté au moyen du circuit d'exploitation (8).

2. Dispositif de contrôle selon la revendication 1, caractérisé en ce qu'il délivre un signal lorsqu'une valeur limite prédéfinie de la température est dépassée ou sous-dépassée.

3. Dispositif de contrôle selon l'une des revendications précédentes, caractérisée en ce que le circuit d'exploitation (8) présente un comparateur (13, 14).

4. Dispositif de contrôle selon l'une des revendications précédentes, caractérisé en ce que le gradient de température est formé par un organe de différentiation (10, 11, 12).

5. Dispositif de contrôle selon la revendication 4, caractérisé en ce qu'on peut choisir la constante de temps de l'organe de différentiation (10, 11, 12).

6. Dispositif de contrôle selon l'une des revendications précédents, caractérisé en ce que l'on utilise comme détecteur (3) une résistance à coefficient de température positif (PTC).

7. Dispositif de contrôle selon l'une des revendications précédentes, caractérisé en ce que l'on peut brancher, après le circuit d'exploitation (8), un élément indicateur (9, 15) débranchable.

8. Dispositif de contrôle selon l'une des revendications précédentes, caractérisé en ce que l'appareil (20) alimenté par la batterie peut être débranché quand au moins une valeurs limite prédéfinie a été dépassée.
